# EUROPÄISCHE PATENTANMELDUNG

(11) **EP 1 433 403 A1**
(43) Veröffentlichungstag der Anmeldung: **30.06.2004**
(21) Anmeldenummer: 03029600.8
(22) Anmeldetag: 23.12.2003
(51) Int. Cl.: A47J 31/24, A47J 31/30, A47J 31/56

(54) **Espresso-Kaffeemaschine und Verfahren zum Betrieb derselben**

(30) Priorität: 24.12.2002 EP 02028946
(71) Anmelder: Schild, John, 8405 Winterthur (CH)
(72) Erfinder: Schild, John, 8405 Winterthur (CH)
(74) Vertreter: Dr. Graf & Partner

(57) **Zusammenfassung**

Die Espresso-Kaffeemaschine (1) umfasst einen ersten und einen zweiten Vorratsbehälter (2,3) zur Aufnahme von Wasser, wobei der erste und der zweite Vorratsbehälter (2,3) Fluid leitend miteinander verbunden sind. Die Espresso-Kaffeemaschine (1) umfasst einen Temperatursensor (8), ein Ventil (9) und einen Brühkopf (7), wobei der Brühkopf (7) Fluid leitend mit dem ersten und zweiten Vorratsbehälter (2,3) verbunden ist, und wobei der Temperatursensor (8) derart angeordnet ist, dass die Temperatur des dem Brühkopf (7) zugeleiteten Wassers messbar ist, und wobei dem Brühkopf (7) über das Ventil Ventils (9) temperaturabhängig Wasser aus dem ersten und/oder zweiten Vorratsbehälter (2,3) zuführbar ist.

## Beschreibung

Die Erfindung betrifft eine Espresso-Kaffeemaschine gemäss dem Oberbegriff von Anspruch 1. Die Erfindung betrifft weiter ein Verfahren zum Betrieb einer Espresso-Kaffeemaschine gemäss dem Oberbegriff von Anspruch 18.

Aus der Druckschrift DE 34 15 204 A1 ist eine Espresso-Kaffeemaschine bekannt, welche unten einen beheizbaren Flüssigkeitsbehälter aufweist, welcher über eine Steigleitung Fluid leitend mit einem Brühkopf verbunden ist. Am Brühkopf ist ein Behälter zur Aufnahme von gemahlenem Kaffee befestigbar. Das heisse Wasser wird über die Steigleitung dem Brühkopf zugeführt, durch den gemahlenen Kaffee gepresst, und gelangt danach in die unterhalb des Brühkopfs angeordnete Tasse.

Die Herstellung eines guten Espresso-Kaffees mit reproduzierbarer Qualität hängt insbesondere von den folgenden vier Parametern ab: Druck und Temperatur des Wassers, der Kaffee-Mischung sowie der Extraktionszeit. Die bekannte Espresso-Kaffeemaschine weist den Nachteil auf, dass diese Parameter, insbesondere die Wassertemperatur sowie der Druck, erhebliche Schwankungen aufweisen kann, sodass kein optimaler Kaffee erzeugbar ist.

Insbesondere besteht die Gefahr, dass die Wassertemperatur während der Kaffeeerzeugung zu hoch ist, sodass Bitterstoffe aus dem Kaffeepulver gelöst werden. Die bekannte Espresso-Kaffeemaschine weist den weiteren Nachteil auf, dass es sehr umständlich ist dem beheizbaren Behälter frisches Wasser und frisches Kaffeepulver zuzuführen. Zudem ist die bekannte Kaffeemaschine unhandlich gestaltet.

Es ist daher die Aufgabe der vorliegenden Erfindung eine Espresso-Kaffeemaschine zu bilden, mit welcher ein ausgezeichneter Espresso-Kaffee herstellbar ist. Es ist zudem Aufgabe der vorliegenden Erfindung eine einfach zu bedienende Espresso-Kaffeemaschine zu bilden.

Diese Aufgabe wird gelöst mit einer Espresso-Kaffeemaschine aufweisend die Merkmale von Anspruch 1. Die Unteransprüche 2 bis 17 betreffen weitere, vorteilhaft ausgestaltete Espresso-Kaffeemaschinen. Die Aufgabe wird weiter gelöst mit einem Verfahren zum Betrieb einer Espresso-Kaffeemaschine aufweisend die Merkmale von Anspruch 18.

Die Aufgabe wird insbesondere gelöst mit einer Espresso-Kaffeemaschine umfassend einen ersten und einen zweiten Vorratsbehälter zur Aufnahme von Wasser, wobei der erste und der zweite Vorratsbehälter gegenseitig thermisch isoliert angeordnet und Fluid leitend miteinander verbunden sind, sowie umfassend einen Brühkopf, welcher derart Fluid leitend mit dem ersten und zweite Vorratsbehälter verbunden ist, dass dem Brühkopf temperaturabhängig Wasser aus dem ersten und/oder zweiten Vorratsbehälter zuführbar ist. Der erste und zweite Vorratsbehälter sind als zwei kommunizierende Gefässe ausgestaltet.
Die erfindungsgemässe Espresso-Kaffeemaschine weist den Vorteil auf, dass die Temperatur des dem Brühkopf zugeführten Wassers mit Hilfe eines Temperatursensors sowie eines Ventils regelbar ist, sodass die Wassertemperatur während dem Brühen vorgebbar und vorzugsweise annähernd konstant ist. Dies ermöglicht Espressokaffee mit gleichbleibender, reproduzierbarer Qualität zu erzeugen. Bei herkömmlichen Espresso-Kaffeemaschinen ist der Druck des Wassers von dessen Temperatur abhängig. Die erfindungsgemässe Espresso-Kaffeemaschine weist den entscheidenden Vorteil auf, dass der Druck des Wassers unabhängig von der Temperatur ist. Dadurch, dass die Temperatur des Wassers geregelt einstellbar ist, kann der Espressokaffe unter vorgebbaren, optimalen Bedingungen erzeugt werden. Beispielsweise kann der Druck 10 Bar und die Wassertemperatur zwischen 90 und 95 °C betragen.

In einer bevorzugten Ausführungsform ist das Ventil sowie der Temperatursensor als Dreiwege-Thermostatmischventil ausgestaltet. In einer vorteilhaften Weiterbildung ist der Temperatursensor als Bimetallsensor ausgestaltet, welcher infolge unterschiedlicher Wärmeausdehnung direkt auf die Stellung des Ventils einwirkt. Diese Anordnung erlaubt eine vollständig mechanische Temperaturregelung, sodass keine elektronischen Sensoren und Aktoren erforderlich sind. Der Bimetallsensor basiert auf der Kombination von zwei Metallen unterschiedlicher Wärmeausdehnung. Der Bimetallsensor kann beispielweise streifenförmig ausgestaltet sein, oder als ein Stift in einer Büchse, wobei der Stift und die Büchse aus unterschiedlichem Metall bestehen. Diese Anordnung ermöglicht somit eine Espresso-Kaffeemaschine mit ausschliesslich mechanischen Komponenten auszubilden. Der Temperatursensor und/oder das Ventil könnte jedoch auch elektrische und/oder elektronische Komponenten aufweisen.

Die erfindungsgemässe Espresso-Kaffeemaschine umfasst zwei Vorratsbehälter, in welchen Wasser gespeichert ist, wobei die zwei Vorratsbehälter derart angeordnet sind, dass sie im erwärmten Zustand Wasser mit unterschiedlicher Temperatur aufweisen. Dadurch stehen dem Ventil zwei Wasserquellen unterschiedlicher Temperatur zur Verfügung, welche gegenseitig mischbar sind, um derart eine vorgebbare Wassertemperatur zu erreichen.

Der zweite Vorratsbehälter könnte zusätzlich eine Kühlvorrichtung aufweisen,'z. B. einen passiven Kühler, um das sich im zweiten Vorratsbehälter befindliche Wasser zu kühlen. Der zweite Vorratsbehälter könnte beispielsweise auch einzig als Kühlrohr ausgestaltet sein, sodass das Kühlrohr sowohl den zweiten Vorratsbehälter als auch eine Kühlvorrichtung ausbildet.

Die Erfindung wird nachfolgend an Hand mehrerer Ausführungsbeispiele im Detail beschrieben. Es zeigen:
- Figur 1: eine schematische Ansicht der Espresso-Kaffeemaschine;
- Figur 2: ein Temperatur-Zeit-Verlauf des Wassers während der Kaffeeerzeugung;
- Figur 3: eine schematische Ansicht einer weiteren Mischvorrichtung;
- Figur 4a, 4b, 4c: eine schematische Darstellung dreier Zustände während der Kaffeeerzeugung;
- Figur 5a: eine Seitenansicht einer Espresso-Kaffeemaschine;
- Figur 5b: ein Schnitt durch die Espresso-Kaffeemaschine gemäss Figur 5a entlang der Schnittlinie A-A;
- Figur 5c: ein Schnitt durch die Espresso-Kaffeemaschine gemäss Figur 5a entlang der Schnittlinie B-B;
- Figur 5d: eine Draufsicht der Espresso-Kaffeemaschine gemäss Figur 5a;
- Figur 6: eine schematische Ansicht einer weiteren Espresso-Kaffeemaschine.

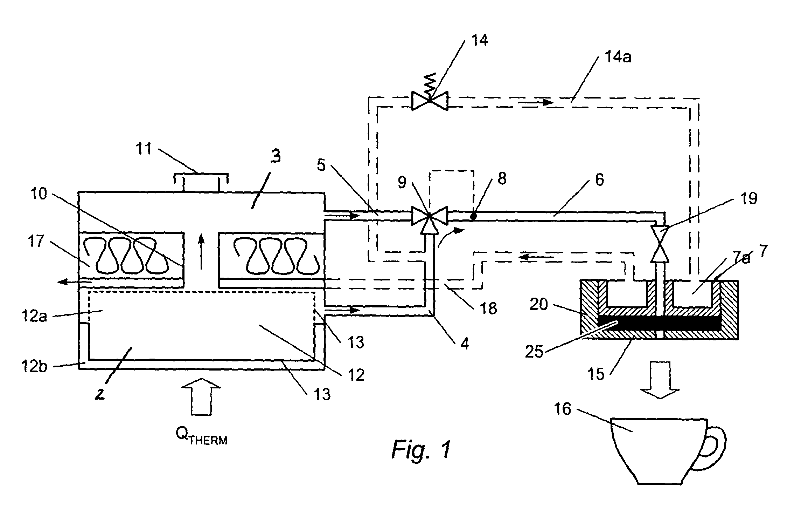

Figur 1 zeigt eine Espresso-Kaffeemaschine 1 mit einem ersten sowie einem zweiten Vorratsbehälter 2,3 zur Aufnahme von Wasser, welche gegenseitig beabstandet und mit einem dazwischen angeordneten Isolationsmittel 17, beispielsweise Luft oder ein Kunststoff, gegenseitig thermisch isoliert sind, um einen Wärmefluss vom ersten Vorratsbehälter 2 zum zweiten Vorratsbehälter 3 zu reduzieren. Die beiden Vorratsbehälter 2,3 sind Fluid leitend miteinander verbunden, d.h. als zwei kommunizierende Gefässe ausgestaltet. Eine erste Leitung 4 verbindet den ersten Vorratsbehälter 2 über ein Ventil 9 Fluid leitend mit einer gemeinsamen Zuleitung 6. Eine zweite Leitung 5 verbindet den zweiten Vorratsbehälter 3 über das gemeinsame Dreiwegeventil 9 Fluid leitend mit der gemeinsamen Zuleitung 6. Die Zuleitung 6 führt über ein handbetätigbares Ventil 19 zum Brühkopf 7. In der Zuleitung 6 ist ein Temperatursensor 8 angeordnet, welcher die Temperatur der Zuleitung 6 oder die Temperatur des sich in der Zuleitung 6 befindlichen Wassers misst. Die Stellung des Ventils 9 wird in Abhängigkeit der vom Temperatursensor 8 gemessenen Temperatur geregelt. Im dargestellten Ausführungsbeispiel ist dies eine vollständig mechanisch wirkende Regelvorrichtung. Das derart bezüglich Temperatur geregelte Wasser wird über die Zuleitung 6 dem Brühkopf 7 zugeführt, durch den gemahlenen Kaffee 25 gepresst, und über das Sieb 15 der Kaffeetasse 16 zugeleitet. Der erste Vorratsbehälter 2 ist über eine vertikal verlaufende Steigleitung 10 Fluid leitend mit dem zweiten Vorratsbehälter 3 verbunden. Zwischen dem ersten und dem zweiten Vorratsbehälter 2,3 ist eine thermische Isolation 17 angeordnet. Der Vorratsbehälter 2 wird von unten beheizt. Auf Grund der Anordnung der Vorratsbehälter 2,3 sowie der Isolation 17 weist das sich im Vorratsbehälter 2 befindlichen Wasser eine höhere Temperatur auf als das Wasser im Vorratsbehälter 3. Oben im Vorratsbehälter 3 ist eine druckfest verschliessbare Öffnung 11 angeordnet, über welche beide Vorratsbehälter 2,3 mit Wasser füllbar sind.

In einer vorteilhaften Ausgestaltung ist der erste Vorratsbehälter 2 über ein Überdruckventil 14 sowie einen nachfolgenden Auslass 14a Fluid leitend mit einer Vorwärmkammer 7a des Brühkopfs 7 verbunden. In einer weiteren vorteilhaften Ausgestaltung ist die Vorwärmkammer 7a zudem über eine Ableitung 18 Fluid leitend mit der Aussenhülle des ersten Vorratsbehälters 2 verbunden.

Die Espresso-Kaffeemaschine weist einen Hohlraum 12 auf, welcher von einer Membrane 13 in zwei Teilräume 12a, 12b unterteilt ist. Der eine Teilraum 12a bildet den ersten Vorratsbehälter 2. Der zweite Teilraum 12b enthält ein bei niedriger Temperatur siedendes Fluid wie Ethanol.

Die in Figur 1 dargestellte Espresso-Kaffeemaschine 1 wird wie nachfolgend beschrieben betrieben:
Der Verschluss 11 wird geöffnet und beide Vorratsbehälter 2,3 vollständig mit Wasser gefüllt. Danach wird der Verschluss 11 wieder geschlossen. Die Espresso-Kaffeemaschine 1 weist im wesentlichen Raumtemperatur auf. Das Ventil 9 weist eine derartige Stellung auf, dass die zweite Leitung 5 geschlossen ist. Das Handventil 19 ist ebenfalls geschlossen. Frisches Kaffeepulver 25 wird in den Kolben 20 gefüllt und dieser am Brühkopf 7 befestigst. Eine Wärmequelle wird eingeschaltet und Wärmeenergie Q_{THERM} dem ersten Vorratsbehälter 2 zugeführt. Als Wärmequelle dient beispielsweise eine Herdplatte, eine Gasflamme oder ein Feuer. Als Wärmequelle ist jedoch auch eine elektrisch beheizbare Vorrichtung geeignet, welcher auch Teil der Espresso-Kaffeemaschine 1 bilden könnte. Die zugeführte Wärmeenergie erwärmt vorerst das sich im zweiten Teilraum 12b befindliche Ethanol und zudem das sich im Vorratsbehälter 2 befindliche Wasser. Auf Grund der Isolation 17 weist der Vorratsbehälter 3 Wasser mit tieferer Temperatur auf. Die Erwärmung des Ethanols (C₂H₆O) hat im Teilraum 12b eine Druckerhöhung zur Folge, welche über die flexible Membran 13 auf das sich im ersten Vorratsbehälter 2 befindliche Wasser einwirkt. Der Dampfdruck von Ethanol steigt mit zunehmender Temperatur an und erreicht beispielsweise bei 130°C einen Druck von etwa 10 Bar und bei 145°C einen Druck von etwas 15 Bar. Das Überdruckventil 14 kann derart ausgelegt sein, dass dieses bei 10 Bar öffnet, so dass eine geringe Menge Wasser aus dem ersten Vorratsbehälter 2 entweicht und über den Auslass 14a dem Brühkopf 7 zugeführt wird, damit sich dieser erwärmt. Danach wird dieses Wasser über die Leitung 18 zurück zur Oberfläche des ersten Vorratsbehälters 2 geleitet, wo dieses vollständig verdampft. Die erforderliche Verdampfungswärme wird dem ersten Vorratsbehälter 2 entzogen, was vorzugsweise zur Folge hat, dass der Druck und/oder die Temperatur des Vorratsbehälters 2 nicht mehr oder nur noch geringfügig ansteigt. Das Handventil 19 wird vom Benutzer geöffnet, so dass das Wasser durch den gemahlenen Kaffee 25 und anschliessend als Espresso über das Sieb 15 in die Tasse 16 strömt. Während diesem Extraktionsvorgang wird die Stellung des Ventils 9 derart verändert, dass die Temperatur des Wassers in der Zuleitung 6 auf eine optimale Brühtemperatur geregelt wird, indem die Temperatur mit dem Sensor 8 gemessen wird, und die Stellung des Ventils 9 derart entsprechend kontinuierlich verändert wird, dass das Wasser gemischt aus dem ersten Vorratsbehälter 2 und/oder dem zweiten Vorratsbehälter 3 der Zuleitung 6 zugeführt wird. Sobald die Tasse 16 genügend voll ist wird das Handventil 19 wieder manuell geschlossen. Daraufhin wird der gemahlene Kaffee 25 ersetzt, und es können so lange weitere Kaffees erzeugt werden, bis die Membran 13, wie in Figur 1 strichliiert dargestellt, zu einem Anschlag kommt. Daraufhin muss die Espresso-Kaffeemaschine 1 abgekühlt werden und/oder mit frischem Wasser aufgefüllt werden.

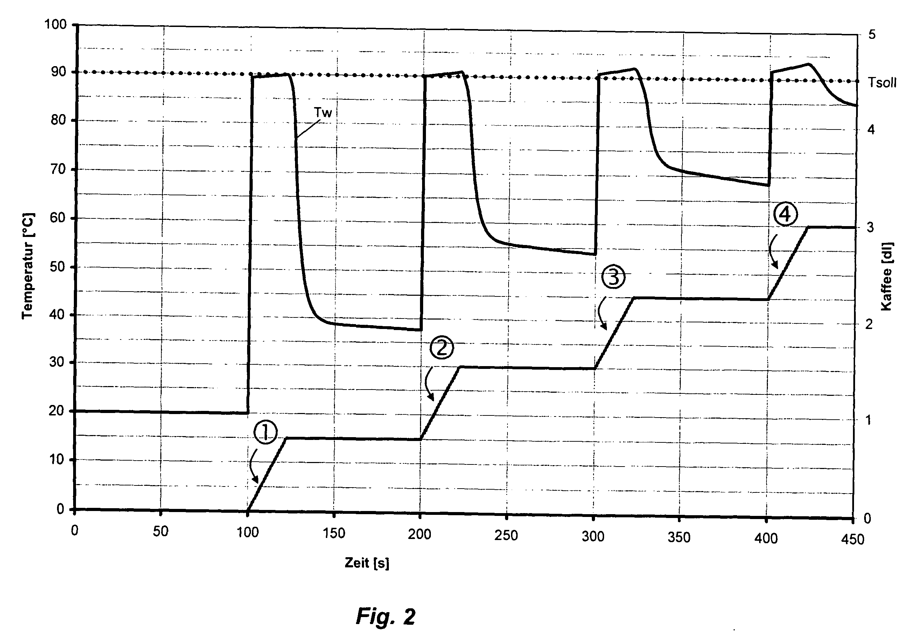

Figur 2 zeigt idealisiert die während der Kaffeeerzeugung vorherrschende Wassertemperatur in Funktion der Zeit. Während den mit "1", "2", "3" und "4" bezeichneten Intervallen wird jeweils ein Espresso-Kaffee erzeugt. Figur 2 zeigt zudem die am Sensor 8 auftretende Wassertemperatur Tw (in °C) in Funktion der Zeit. Die Wassertemperatur Tw weist während der Kaffeeerzeugung eine im wesentlichen konstante Temperatur auf. Dies bewirkt den Vorteil, dass ein Espresso-Kaffee mit reproduzierbarer Qualität erzeugbar ist.

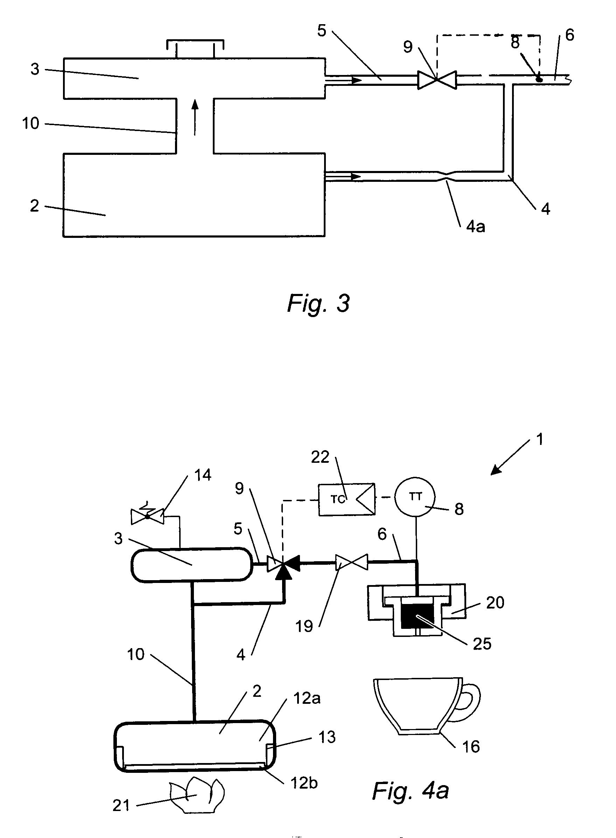

Figur 3 zeigt schematisch eine weitere Anordnung einer Mischvorrichtung. Im Unterschied zu der in Figur 1 dargestellten Anordnung weist die erste Leitung 4 eine Verengung 4a auf, welche als eine Blende wirkt. Zudem ist nur die zweite Leitung 5 mit einem regelbaren Ventil 9 versehen, wogegen die erste Leitung 4 direkt in die gemeinsame Zuleitung 6 mündet. In der Zuleitung 6 ist wiederum ein Temperatursensor 8 angeordnet, welcher die Stellung des Ventils 9 regelt. Auch diese Anordnung erlaubt die Wassertemperatur in der Zuleitung 6 zu regeln.

Die Figuren 4a-4c zeigen ein weiteres, schematisch dargestelltes Ausführungsbeispiel einer Espresso-Kaffeemaschine 1 in drei unterschiedlichen Betriebszuständen. Dieselben Bezugszeichennummern verweisen auf dieselben, bereits mit Figur 1 erläuterten Gegenstände. Die Espresso-Kaffeemaschine 1 umfasst einen Thermostatregler 22, welcher mit dem Temperatursensor 8 die Wassertemperatur in der Zuleitung 6 erfasst, und die Stellung des Ventils 9 kontinuierlich regelt. Der Thermostatregler 22 weist beispielsweise eine P-Regelcharakteristik auf, das heisst, dass die Stellung des Ventils 9 proportional zur Temperatur verändert wird. Im Unterschied zu der in Figur 1 dargestellten Ausführungsform sind der erste und zweite Vorratsbehälter 2,3 derart gegenseitig beabstandet, dass zwischen den Vorratsbehältern 2,3 die Tasse 16 sowie der Kolben 20 Platz findet, und die Tasse 16 bequem auf die Oberfläche des ersten Vorratsbehälters 2 gestellt werden kann. Der erste und zweite Vorratsbehälter 2,3 sind somit durch die sich dazwischen befindliche Luft gegenseitig thermisch isoliert.

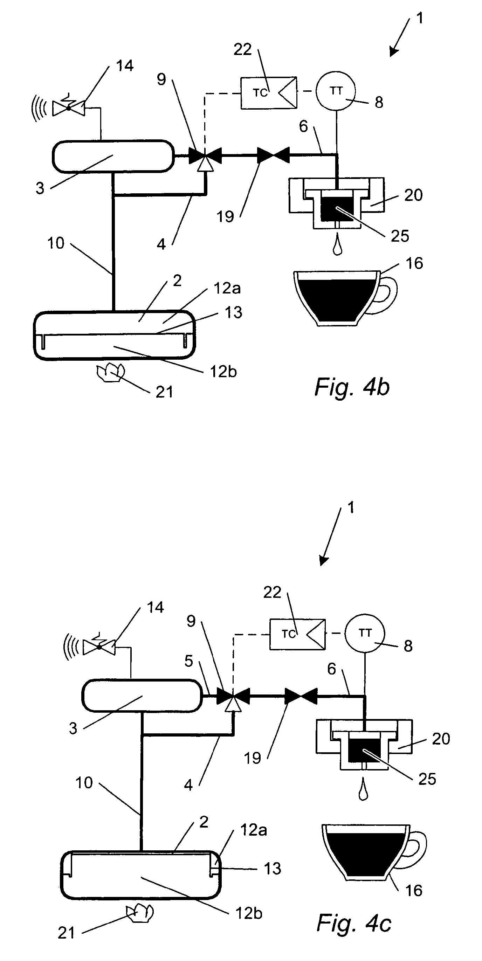

Die vorerst kalte Espresso-Kaffeemaschine 1 wird mit Hilfe einer Gasflamme 21 erwärmt, indem diese den ersten Vorratsbehälter 2 erwärmt. Während dem Aufheizen bleibt das Handventil 19 geschlossen. Sobald das Wasser genügend erwärmt ist, was beispielsweise dadurch angezeigt wird, dass das Überdruckventil 14 mit einem Pfeifton anspricht, wird das Handventil 19 von Hand geöffnet, und der Kaffee fliesst in die bereitgestellte Tasse 16. Während der Kaffeeerzeugung wird die Temperatur des in der gemeinsamen Zuleitung 6 zufliessenden Wassers durch eine entsprechende, automatische Regelung des Ventils 9 im wesentlichen konstant gehalten. Der erste Vorratsbehälter 2 ist beispielsweise derart ausgelegt, dass er ein Wasserfassungsvermögen für sechs Tassen aufweist. In dem in Figur 4b dargestellten Zustand ist der Wasservorrat im ersten Vorratsbehälter 2 zur Hälfte aufgebraucht, sodass der zweite Teilraum 12b etwa die Hälfte des Hohlraumes 12 einnimmt. Es können nun weitere Tassen Kaffee erzeugt werden, bis die Espresso-Kaffeemaschine 1 in den in Figur 4c dargestellten Zustand gelangt, in welchem der Wasservorrat des ersten Vorratsbehälters 2 aufgebraucht ist. Die flexible Membran 13 liegt am oberen Innenraum des ersten Vorratsbehälters 2 an und kann daher kein Wasser mehr verdrängen. Die Espresso-Kaffeemaschine ist nun abzukühlen. Über die verschliessbare Öffnung 11 kann danach wieder frisches Wasser eingefüllt werden. Der zweite Teilraum 12b verkleinert sich dabei wieder auf die in Figur 4a dargestellte Ausgangsgrösse.

Der Regler 22 könnte auch als elektrische Regelvorrichtung aufweisend eine P- oder PI-(Proportional Integral) oder PID-(Proportional Integral Differential)Regelcharakteristik ausgestaltet sein.

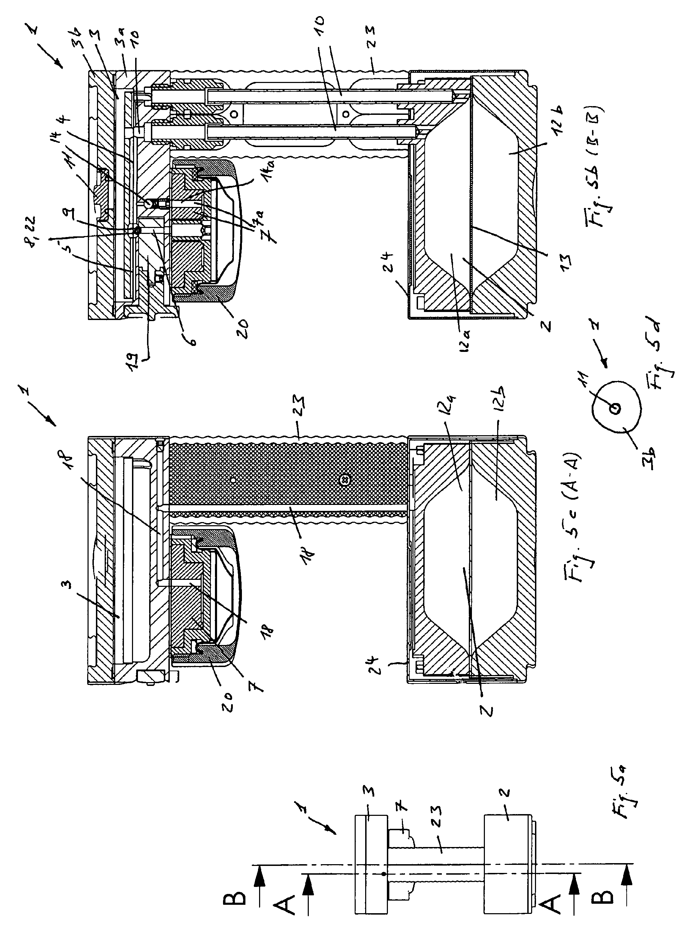

Die Figuren 5a-5d zeigen ein weiteres Ausführungsbeispiel einer Espresso-Kaffeemaschine 1. Figur 5a zeigt in einer Seitenansicht die Espresso-Kaffeemaschine 1 mit erstem und zweitem Vorratsbehälter 2,3, welche über ein Säulenteil 23 gegenseitig beabstandet gehalten sind. Der in Figur 5b dargestellte Längsschnitt entlang der Schnittlinie B-B zeigt den Innenaufbau der Espresso-Kaffeemaschine 1 im Detail. Der erste Vorratsbehälter 2 umfasst einen Hohlraum 12 mit den durch die Membran 13 getrennten Teilräumen 12a, 12b. Der obere Teilraum 12a ist mit Wasser füllbar. Der erste Vorratsbehälter 2 ist teilweise von einem thermisch isolierenden Hülle 24 umgeben, welches gegen oben eine Standfläche für die Tasse 16 bildet und vor Berührung der heissen Teile schützt. Der erste Vorratsbehälter 2 ist über eine erste und eine zweite Steigleitung 10 Fluid leitend mit dem zweiten Vorratsbehälter 3 verbunden. Der zweite Vorratsbehälter 3 umfasst ein erstes Gehäuseteil 3a und ein zweites Gehäuseteil 3b, welche den Innenraum des Vorratsbehälters 3 begrenzen. Im zweiten Gehäuseteil 3b ist zudem die verschliessbare Öffnung 11 angeordnet. Ausgehend von der Steigleitung 10 führt die erste Leitung 4 zum Ventil 9. Ausgehend vom Innenraum des zweiten Vorratsbehälters 3 führt die zweite Leitung 5 zum Ventil 9. Dem Ventil 9 nachfolgend führt die gemeinsame Zuleitung 6 zum Brühkopf 7. Der Temperatursensor 8 sowie die Regelvorrichtung 22 sind in einem gemeinsamen Bauteil angeordnet. Die erste Leitung 4 ist zudem Fluid leitend mit dem Überdruckventil 14 verbunden. Die beiden Steigleitungen 10 sind von einer wärmeisolierenden Säule 23 umgeben, welche beispielsweise aus einem Kunststoff besteht. Aus der Figur 5c, einem Längsschnitt entlang der Schnittlinie A-A, ist insbesondere die Rückführleitung 18 ersichtlich. Das über das Überdruckventil 14 und die Leitung 14a der Vorwärmkammer 7a des Brühkopfs 7 zugeführte heisse Wasser wird über die Rückführleitung 18 von der Vorwärmkammer 7a abgeleitet und über den vertikal verlaufenden Abschnitt 18 dem Zwischenraum zwischen erstem Vorratsbehälter 2 und Hülle 24 zugeleitet. Die Hülle 24 weist Löcher auf, sodass der sich bildende Wasserdampf durch diese entweichen kann. Diese Befeuchtung des ersten Vorratsbehälters 2 dient dazu, diesen zu kühlen, um ein Überhitzen zu vermeiden. Figur 5d zeigt eine Draufsicht der Espresso-Kaffeemaschine 1. Die in den Figuren 5a-5d dargestellte Espresso-Kaffeemaschine 1 weist zylinderförmig ausgestaltete Vorratsbehälter 2,3 auf. In einer vorteilhaften Ausgestaltung ist für den Zwischenraum zwischen dem ersten und zweiten Vorratsbehälter 2,3 ein entfernbares, zylinderförmiges Abgrenzteil vorgesehen, welches beispielsweise aus einem transparenten Kunststoff besteht, welches denselben Aussendurchmesser wie der erste und zweite Vorratsbehälter 2,3 aufweist, und welches diesen Zwischenraum zu verschliessen erlaubt. Wird die Espresso-Kaffeemaschine 1 beispielsweise nicht gebraucht oder transportiert, so wird der Zwischenraum mit dem Abschliessteil verschlossen. Die gesamte Espresso-Kaffeemaschine 1 ist somit zylinderförmig ausgestaltet, wobei im Zwischenraum zudem beispielsweise der Kolben 20, einige Portionen Kaffee sowie eine oder zwei Tassen 16 angeordnet sein könnten. Vor dem Gebrauch der Espresso-Kaffeemaschine 1 wird das Abschliessteil entfernt und die sich im Zwischenraum befindlichen Gegenstände entnommen. Danach kann die Espresso-Kaffeemaschine mit Wasser gefüllt und anschliessend erwärmt werden.

Auf die flexible Membran 13 und den mit einem leichtflüchtigen Fluid gefüllten Teilraum 12b könnte auch verzichtet werden. Figur 3 zeigt schematisch ein Ausführungsbeispiel eines ersten Vorratsbehälters 2, welcher vollständig mit Wasser füllbar ist, und welcher keine Membran 13 und keinen Teilraum 12b aufweist.

Die beiden Vorratsbehälter 2,3 könnten auch in einem gemeinsamen Druckbehälter angeordnet sein, indem die in Figur 1 dargestellte Anordnung umfassend den ersten und zweiten Vorratsbehälter 2,3 sowie den Teilraum 12b und die Isolation 17 in einem gemeinsamen Druckbehälter angeordnet sind, welcher oben eine Öffnung 11 aufweist.

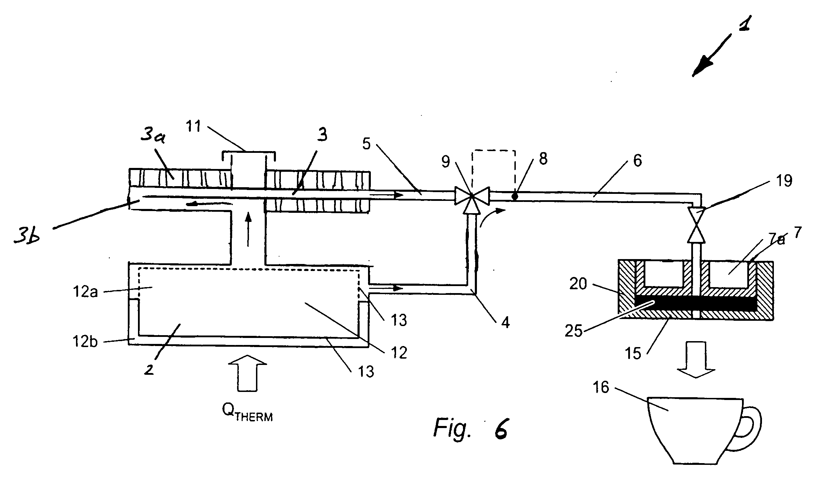

Im Unterschied zu der in Figur 1 dargestellten Espresso-Kaffeemaschine 1 ist in der in Figur 6 dargestellten Espresso-Kaffeemaschine 1 der zweite Vorratsbehälter 3 einzig als Kühlrohr 3b ausgestaltet, entlang welchem das darin zum Ventil 9 strömende Wasser gekühlt wird. Um die Wärmeabgabe zu vergrössern kann es sich als vorteilhaft erweisen, das Kühlrohr 3b mit einer Kühlvorrichtung 3a zu versehen. Die Kühlvorrichtung 3a ist vorzugsweise als eine passiv wirkende Kühlvorrichtung ausgestaltet, beispielsweise als ein mit Kühlrippen versehenes Blech oder als ein mit Kühlrippen versehener Gusskörper. Die in Figur 6 dargestellte Kühlvorrichtung 3a könnte auch mit dem in Figur 1, 5b, 5c dargestellten zweiten Vorratsbehälter 3 verbunden sein, um diesen zusätzlich zu kühlen.

Der Thermostatregler 22 kann fest auf eine vorgegebene Wassertemperatur eingestellt sein. Der Thermostatregler 22 kann jedoch auch eine Einstellvorrichtung aufweisen, mit welcher die dem Brühkopf 7 zuzuleitende Wassertemperatur einstellbar ist.

## Patentansprüche

1. Espresso-Kaffeemaschine (1) umfassend einen ersten und einen zweiten Vorratsbehälter (2,3) zur Aufnahme von Wasser, wobei der erste und der zweite Vorratsbehälter (2,3) Fluid leitend miteinander verbunden sind, sowie umfassend einen Temperatursensor (8), ein Ventil (9) und einen Brühkopf (7), wobei der Brühkopf (7) Fluid leitend mit dem ersten und zweiten Vorratsbehälter (2,3) verbunden ist, und wobei der Temperatursensor (8) derart angeordnet ist, dass die Temperatur des dem Brühkopf (7) zugeleiteten Wassers messbar ist, und wobei dem Brühkopf (7) über das Ventil Ventils (9) temperaturabhängig Wasser aus dem ersten und/oder zweiten Vorratsbehälter (2,3) zuführbar ist.

2. Espresso-Kaffeemaschine (1) nach Anspruch 1, **dadurch gekennzeichnet, dass** der erste und zweite Vorratsbehälter (2,3) gegenseitig thermisch isoliert angeordnet sind.

3. Espresso-Kaffeemaschine (1) nach einem der vorhergehenden Ansprüche, **dadurch gekennzeichnet, dass** der zweite Vorratsbehälter (3) eine Kühlvorrichtung (3a) umfasst.

4. Espresso-Kaffeemaschine (1) nach einem der vorhergehenden Ansprüche, **dadurch gekennzeichnet, dass** der zweite Vorratsbehälter (3) als ein Kühlrohr (3b) ausgestaltet ist.

5. Espresso-Kaffeemaschine (1) nach einem der vorhergehenden Ansprüche, **dadurch gekennzeichnet, dass** eine erste Leitung (4) mit dem erste Vorratsbehälter (2) und eine zweite Leitung (5) mit dem zweiten Vorratsbehälter (3) verbunden ist, dass die erste und die zweite Leitung (4,5) in eine gemeinsame Zuleitung (6) für den Brühkopf (7) münden, und dass der Temperatursensor (8) zur Erfassung der Temperatur der gemeinsamen Zuleitung (6) oder der Temperatur des sich in der gemeinsamen Zuleitung (6) befindlichen Wassers angeordnet ist, wobei zumindest eine der Leitungen (4,5) ein Ventil (9) aufweist, dessen Stellung abhängig ist von der erfassten Temperatur.

6. Espresso-Kaffeemaschine nach Anspruch 5, **dadurch gekennzeichnet, dass** die erste und zweite Leitung (4,5) über ein Dreiwegeventil (9) mit der gemeinsamen Zuleitung (6) verbunden sind.

7. Espresso-Kaffeemaschine nach Anspruch 5, **dadurch gekennzeichnet, dass** die erste Leitung (4) eine Querschnittsverengung (4a) aufweist, und dass die zweite Leitung (5) ein Ventil (9) aufweist.

8. Espresso-Kaffeemaschine nach einem der vorhergehenden Ansprüche, **dadurch gekennzeichnet, dass** der Temperatursensor (8) als Bimetall ausgestaltet ist, welches auf die Stellung des Ventils (9) einwirkt.

9. Espresso-Kaffeemaschine nach einem der vorhergehenden Ansprüche, **dadurch gekennzeichnet, dass** das Ventil (9) als elektromechanisches Ventil ausgestaltet ist, und insbesondere eine P-, PI- oder PID-Regelcharakteristik aufweist.

10. Espresso-Kaffeemaschine nach einem der vorhergehenden Ansprüche, **dadurch gekennzeichnet, dass** der erste und der zweite Vorratsbehälter (2,3) in einem gemeinsamen Druckgehäuse angeordnet sind.

11. Espresso-Kaffeemaschine nach einem der vorhergehenden Ansprüche, **dadurch gekennzeichnet, dass** der erste Vorratsbehälter (2) unten angeordnet ist, dass der zweite Vorratsbehälter (3) oben angeordnet ist, und dass die beiden Vorratsbehälter (2,3) über eine vertikal verlaufende Steigleitung (10) miteinander Fluid leitend verbunden sind.

12. Espresso-Kaffeemaschine nach Anspruch 11, **dadurch gekennzeichnet, dass** der zweite Vorratsbehälter (3) eine druckfest verschliessbare Öffnung (11) zum Einfüllen von Wasser aufweist.

13. Espresso-Kaffeemaschine nach einem der vorhergehenden Ansprüche, **dadurch gekennzeichnet, dass** der Brühkopf (7) zwischen dem ersten und dem zweiten Vorratsbehälter (2,3) angeordnet ist.

14. Espresso-Kaffeemaschine nach einem der vorhergehenden Ansprüche, **dadurch gekennzeichnet, dass** diese einen Hohlraum (12) aufweist, welcher von einer Membran (13) in zwei Teilräume (12a, 12b) unterteilt ist, wobei der eine Teilraum (12a) den ersten Vorratsbehälter (2) bildet, und wobei der zweite Teilraum (12b) zur Druckerzeugung ein bei niedriger Temperatur siedendes Fluid wie Ethanol enthält.

15. Espresso-Kaffeemaschine nach einem der vorhergehenden Ansprüche, **dadurch gekennzeichnet, dass** ein Überdruckventil (14) Fluid leitend mit dem ersten und/oder zweiten Vorratsbehälter (2,3) verbunden ist.

16. Espresso-Kaffeemaschine nach Anspruch 15, **dadurch gekennzeichnet, dass** der Auslass (14a) des Überdruckventils (14) dem Brühkopf zu dessen Vorwärmung zugeleitet ist.

17. Espresso-Kaffeemaschine nach Anspruch 15 oder 16, **dadurch gekennzeichnet, dass** der Auslass (14a) des Überdruckventils (14) derart der Oberfläche des ersten und/oder zweiten Vorratsbehälters (2,3) zugeleitet ist, dass das verdampfende Wasser eine kühlende Wirkung auf den ersten und/oder zweiten Vorratsbehälter (2,3) ausübt.

18. Verfahren zur Herstellung von Espresso-Kaffee in dem Wasser in einem ersten Vorratsbehälter (2) erhitzt wird, in dem ein zweiter Vorratsbehälter (3) derart Fluid leitend mit dem ersten Vorratsbehälter (2) verbunden ist, dass das Wasser im zweiten Vorratsbehälter (3) eine tiefere Temperatur als im ersten Vorratsbehälter (2) aufweist, und dass das Wasser derart dem Brühkopf (7) zugeführt wird, dass die Temperatur des zugeführten Wassers überwacht wird, und in Abhängigkeit der Temperatur das Wasser des ersten und/oder zweiten Vorratsbehälters (2,3) dem Brühkopf (7) zugeleitet wird.
